Europäisches Patentamt

(19) **European Patent Office**

Office européen des brevets

(11) Veröffentlichungsnummer: **0 022 212**
**B1**

(12) # EUROPÄISCHE PATENTSCHRIFT

(45) Veröffentlichungstag der Patentschrift:
07.07.82

(51) Int. Cl.³: **C 09 D 3/387**, C 09 G 1/08,
C 23 F 11/00

(21) Anmeldenummer: 80103568.4

(22) Anmeldetag: 24.06.80

(54) Wasserhaltiges, flüssiges Konservierungsmittel auf Wachsbasis und seine Verwendung zum temporären Schützen von Metall- und Lackoberflächen und ein Verfahren hierzu.

(30) Priorität: 29.06.79 DE 2926197

(43) Veröffentlichungstag der Anmeldung:
14.01.81 Patentblatt 81/2

(45) Bekanntmachung des Hinweises auf die Patenterteilung:
07.07.82 Patentblatt 82/27

(84) Benannte Vertragsstaaten:
DE FR GB IT SE

(56) Entgegenhaltungen:
AT-B-236 007
AT-B-238 851
DE-A-1 669 153
GB-A-960 875

(73) Patentinhaber: HOECHST AKTIENGESELLSCHAFT,
Postfach 80 03 20, D-6230 Frankfurt/Main 80 (DE)

(72) Erfinder: Hereth, Alfred, Loewestrasse 10,
D-8906 Gersthofen (DE)
Erfinder: Rieger, Klaus, Dr., Altvaterstrasse 3,
D-8906 Gersthofen (DE)
Erfinder: Wildgruber, Josef, Dr., Schillerstrasse 6,
D-8901 Gablingen (DE)

# Wasserhaltiges, flüssiges Konservierungsmittel auf Wachsbasis und seine Verwendung zum temporären Schützen von Metall- und Lackoberflächen und ein Verfahren hierzu

Temporäre Korrosionsschutzmittel werden in der Automobilindustrie und im Maschinenbau zum Schutz lackierter und blanker Metalloberflächen verwendet. Im Gegensatz zu Rostschutzlacken und chemischen Passivierungsverfahren soll der Schutzfilm nur vorübergehend schützen und danach leicht und vollständig entfernbar sein. Im allgemeinen und bevorzugt werden lösemittelhaltige Wachsdispersionen eingesetzt wie sie z.B. in der DE-C-1 669 155 beschrieben sind, und die Wachsüberzüge müssen vor Ingebrauchnahme der geschützten Objekte wiederum mit Hilfe von Lösemitteln oder tensidhaltigen Wasser-Lösemittel-Gemischen entfernt werden. Sowohl beim Aufbringen als auch beim Beseitigen stellen die verdampfenden Lösemittel nicht nur eine Belästigung des Arbeitspersonals, sondern ganz allgemein ein Umweltproblem dar, das es zu vermeiden gilt.

Es hat daher nicht an Versuchen gefehlt, die Applikation der Wachsüberzüge in Form von wässrigen Emulsionen vorzunehmen.

Dabei geht es darum, durch Auswahl der geeigneten Rohstoffe wie Filmbildner, Emulgatoren und weiterer Zusatzstoffe die Eigenschaften des auf der lackierten Oberfläche entstehenden Films so zu steuern, dass nach Auftrag der wässrigen Emulsion durch Sprühen, Tauchen, Aufpinseln usw. eine Schutzschicht entsteht, die im Vergleich zu lösemittelhaltigen Einstellungen ausreichend schnell auftrocknet, anschliessend gegen Regeneinflüsse beständig und im Bedarfsfall möglichst einfach wieder entfernbar sein soll.

Wässrige Wachsemulsionen für Zwecke des temporären Oberflächen- und Korrosionsschutzes, die aus Kohlenwasserstoffwachsen (Tafelparaffin und Syntheseparaffin), paraffinbasischen Kohlenwasserstoffölen, Ammoniumsalzen hochschmelzender technischer Montansäuren als Emulgatoren und Paraffinoxidaten bestehen, jedoch immer noch ein Lösungsmittel, nämlich 10% Testbenzin, enthalten, sind z.B. in der DE-B 12 27 592 und der DD-PS 31 887 beschrieben. Die Entfernung des Schutzüberzuges erfolgt mit Testbenzin oder warmem Wasser unter Zusatz von Industriereinigern.

Aus der DE-A-15 19 007 sind Konservierungsmittel für lackierte Flächen bekannt, die aus in Benzin dispergierten Wachsen und/oder Paraffinen mit einem Molekulargewicht von 400 bis 1100, die verzweigte Kohlenwasserstoffketten und/oder zyklische Anteile besitzen, bestehen. Diese Wachse sollen auch zur Herstellung wässriger Konservierungsmittelemulsionen geeignet sein, in der genannten Offenlegungsschrift sind hierzu jedoch weder Anwendungsbeispiele vorhanden, noch irgendwelche weiteren Angaben gemacht.

Die Konservierungsmittel auf Basis der genannten Wachse zeichnen sich gemäss den Angaben der Offenlegungsschrift dadurch aus, dass die in den Wachsfilmen enthaltenen Bestandteile auf keinen Fall, auch nicht bei unvollständig ausgehärteten Lacken und nachträglicher Erwärmung durch Sonneneinstrahlung, in die Lackschicht eindiffundieren, d.h. dass man nach dem Abwaschen der Schutzwachsschicht kein Ausschwitzen beobachtet. Die Entfernung des Konservierungsmittels geschieht mit Lösemitteln, die den Lack nicht angreifen, z.B. Benzin oder Petroleum mit oder ohne Zusatz von Emulgatoren.

Als temporäre Korrosionsschutzmittel für lackierte Oberflächen sind ferner aus der AT-B-238 851 wässrige Emulsionen oder Dispersionen teilverseifter, höherer Fettsäuren, die gegebenenfalls noch wachsartige Kohlenwasserstoffe und/oder geringe Mengen an polaren, organischen Lösungsmitteln und/oder Kunststoffdispersionen enthalten, bekannt. Nachteilig erweist sich bei diesen Präparaten die allzuleichte Wiederentfernbarkeit der Überzüge bereits mit Wasser, was gleichzusetzen ist mit unzureichender Regen-Resistenz, sowie der in der Praxis anscheinend doch erforderliche Lösungsmittelgehalt – Bestandteil aller angegebenen Rezepte ist auch ein Lösungsmittel –, gegen welchen die heutzutag eingesetzten Autolacke auf der Basis von Acrylharzsystemen nicht ausreichend widerstandsfähig sind. Darüber hinaus widerspricht eine Mitverwendung von Lösungsmitteln der Forderung nach einem umweltfreundlichen Konservierungsmittel.

In der DE-A-15 19 220 sind schliesslich wässrige Lösungen oder Emulsionen beschrieben, die sich aus Poylacrylverbindungen (vorzugsweise Polyacrylamid), Polyvinylacetat und anderen Polyvinylverbindungen, Carbaubawachs oder Montanwachs und als ionische Benetzungsmittel Triethanolamin bzw. als nichtionische Benetzungsmittel Polyoxyethylenalkylarylether zusammensetzen.

Vor der Behandlung der zu schützenden Oberflächen müssen diese hier zunächst sorgfältig gereinigt werden, z.B. mit einem schaumartigen Detergenz. Die wasserabweisenden Überzüge sind mit einer schwach alkalischen Reinigungslösung entfernbar.

Die bisher bekannten Konservierungsmittel entsprechen somit nicht voll den Anforderungen der Automobilindustrie nach umweltfreundlichen Konservierungssystemen.

Der vorliegenden Erfindung lag daher die Aufgabe zugrunde, Emulsionen die für den temporären Lackschutz und den Schutz blanker Metallteile (z.B. für die Zwischenlagerung) verwendet werden, zu entwickeln, die völlig lösemittelfrei – nur auf Wasserbasis – aufgebaut sind und sich mit einem Wasser-Dampf-Gemisch (ohne Zusätze) wieder entfernen lassen.

Es wurde nun gefunden, dass alkalische Wachsemulsionen bestimmter Zusammensetzung die vorgenannnten Bedingungen in hervorragender Weise erfüllen.

Gegenstand der Erfindung ist somit ein wasserhaltiges, flüssiges Konservierungsmittel, bestehend aus in Wasser mittels eines Emulgators feinverteilten Wachsen, welches dadurch gekennzeichnet ist, dass es aus 0 bis 30 Gew.-% eines Säurewachses auf Basis Montanwachs mit einem Tropfpunkt von 78 bis 100°C und einer Säurezahl von 100 bis 200, oder eines Esterwachses auf Basis Montanwachs mit einem Tropfpunkt von 70 bis 91°C, einer Säurezahl von 1 bis 100 und einer Verseifungszahl von 80 bis 180, oder einer Mischung derartiger Wachse, 0 bis 20 Gew.-% eines Naturwachses, 5 bis 50 Gew.-% eines Kohlenwasserstoffwachses oder eines Oxidates eines derartigen Wachses, oder einer Mischung aus solchen Wachsen, 0,01 bis 3,0 Gew.-% eines basischen Verseifungsmittels, 0,5 bis 8 Gew.-% eines Emulgators und der auf 100 Gew.-% fehlenden Menge Wasser besteht.

Unter Wachsen auf Basis Montanwachs werden Säurewachse mit einem Tropfpunkt von 78 bis 100°C, vorzugsweise 80 bis 90°C, und einer Säurezahl von 100 bis 200, vorzugsweise 100 bis 150, und Esterwachse mit einem Tropfpunkt von 70 bis 91°C, vorzugsweise 78 bis 88°C, einer Säurezahl von 1 bis 100, vorzugsweise 20 bis 50, und einer Verseifungszahl von 80 bis 180, vorzugsweise 100 bis 150, verstanden. Derartige Wachse sind von verschiedenen Lieferanten im Handel. Die Menge in der Emulsion beträgt 0 bis 30, vorzugsweise 4 bis 20 und insbesondere 6 bis 15 Gew.-%.

Als Beispiele für Naturwachse, die in Mengen von 0 bis 20, vorzugsweise 0 bis 15 und insbesondere 0 bis 12 Gew.-% in den Emulsionen enthalten sein können, seien z.B. Carnaubawachs, Candelillawachs und Japanwachs genannt.

Für das erfindungsgemässe Konservierungsmittel geeignete Kohlenwasserstoffwachse sind Paraffine mit einem Erweichungspunkt (EP) von 48 bis 62, vorzugsweise 50 bis 56°C, Syntheseparaffine mit einem Erweichungspunkt von 98 bis 104, vorzugsweise 102 bis 104°C, hochmolekulare wachsartige (ca. $C_{30}$) 1-Olefine mit einem EP von 70 bis 75, vorzugsweise 73 bis 75°C, mikrokristalline Wachse mit einem EP von 50 bis 90, vorzugsweise 60 bis 70°C, und Polyolefinwachse mit einem EP von 100 bis 130, vorzugsweise 110 bis 130°C. Zu den Kohlenwasserstoffwachsen zu rechnen sind auch deren Oxidate, insbesondere die Polyolefinwachsoxidate mit einem Tropfpunkt von 95 bis 130, vorzugsweise 100 bis 115°C, und einer Säurezahl von 1 bis 70, vorzugsweise 15 bis 30. Die Kohlenwasserstoffwachse sind in den Emulsionen in Mengen von 5 bis 50, vorzugsweise 10 bis 25 und insbesondere 10 bis 20 Gew.-% enthalten.

Sowohl bei den genannten Wachsen auf Montanwachsbasis als auch bei den Kohlenwasserstoffwachsen und ihren Oxidaten und auch bei den Naturwachsen können Mischungen aus mehreren Vertretern der jeweiligen Gruppe eingesetzt werden.

Tropfpunkt, Säurezahl und Verseifungszahl werden nach den Einheitsmethoden der Deutschen Gesellschaft für Fettforschung bestimmt:

| | |
|---|---|
| Tropfpunkt DGF-M-III 3 (75) | (TP) |
| Säurezahl DGF-M-IV 2 (57) | (SZ) |
| Verseifungszahl DGF-M-IV 2 (57) | (VZ) |

Der Erweichungspunkt wird nach DGF-M-III 13 (75) (EP) ermittelt.

Unter dem Begriff «basische Verseifungsmittel» sind Alkali- und Erdalkalimetallhydroxide, insbesondere Alkalimetallhydroxide wie NaOH, KOH, LiOH, Amine, wie z.B. Triethanolamin, Diethylaminoethanol, Aminomethylpropanol sowie Ammoniak zu verstehen. Besonders geeignet sind Lithium- und Kaliumhydroxid. Die Alkalihydroxide werden vorteilhaft als wässrige, 5 bis 50 Gew.-%ige Lösungen verwendet. Die Menge an basischem Verseifungsmittel beträgt im allgemeinen 0,01 bis 3,0, vorzugsweise 0,02 bis 1 und insbesondere 0,02 bis 0,5 Gew.-%, bezogen auf 100%iges Verseifungsmittel und Emulsionsmenge.

Das erfindungsgemässe Konservierungsmittel enthält weiterhin 0,5 bis 8, vorzugsweise 2 bis 6 und insbesondere 2 bis 4 Gew.-% eines Emulgators. Es kann dies ein anionischer Emulgator (z.B. ein Alkansulfonat oder ein Petrolsulfonat), ein kationischer Emulgator (z.B. Fettamine, sek. und tert. Alkoxyamine, quaternäre Ammoniumverbindungen) oder ein nichtionogener Emulgator (z.B. Alkylphenole, oxethylierte Fettalkohole mit ca. 5 bis 25 Mol Ethylenoxid) sein. Es ist auch möglich, die Emulgatoren miteinander zu kombinieren. Bevorzugt sind die Alkansulfonate.

Das in den Emulsionen enthaltene Wasser sollte nach Möglichkeit demineralisiert sein. Die Menge wird so bemessen, dass stets 100 Gew.-Teile fertige Emulsion vorliegen, in denen mindestens 50 Gew.-% Wasser enthalten sind. Der Konservierungsmittelemulsion können schliesslich noch Korrosionsinhibitoren, z.B. Alkanolaminsalze von stickstoffhaltigen Kondensationsprodukten, oder als Verarbeitungshilfsmittel dienende Stoffe, beispielsweise 0,001 bis 0,05 Gew.-% (bezogen auf Grundemulsion) eines Netz- oder Verlaufmittels, z.B. eines Fluortensides, und/oder 0,5 bis 3 Gew.-% eines oxethylierten Fettalkohols und/oder eines Alkylphenols, zugesetzt werden.

Zur Herstellung des erfindungsgemässen Konservierungsmittels werden die Wachse bei einer Temperatur von ca. 100 bis 130°C geschmolzen, mit dem Verseifungsmittel versetzt und ca. 5 bis 15 Minuten bei dieser Temperatur gehalten. Sodann wird der Emulgator zugefügt und der Ansatz durch Vermischen mit Wasser unter Rühren emulgiert. Dabei kann das Wasser zur Wachsschmelze gegeben oder die Wachsschmelze in das vorgelegte Wasser eingerührt werden. Auf diese Weise lassen sich je nach Bedarf bis zu 50%ige Emulsionen herstellen. Mit 25 bis 30%igen Emulsionen, die bevorzugt sind, werden Filme mit einer Trockenfilmstärke von ca. 10 bis 15 Mikron erhalten. Die Emulsionen sollten mit Sprühpistolen aufgebracht werden, die nach dem Kombinationssprühverfahren arbeiten (Materialdruck = airless + zusätzliche Luftummantelung an der Sprühdüse). Wird nur airless oder nur mit Druckluft gesprüht, können uneinheitliche Filme erhalten werden.

Das erfindungsgemässe Konservierungsmittel besitzt folgende Vorteile:

1. Zur Emulgierung wird kein Autoklav benötigt. Es kann im offenen Gefäss gearbeitet werden.

2. Emulsionen sind sehr feinteilig und mehrere Wochen lagerstabil.

3. Sie bilden auf frisch lackierten Flächen sowie auf blanken Metallteilen einheitlich geschlossene Filme, die bei Anwendung von 30%igen Emulsionen Trockenschichtstärken um 15 Mikron aufweisen.

4. Die Filme sind im allgemeinen nach 30 bis 60 Minuten Trocknung bei Raumtemperatur oder 10 Minuten Trocknung in einem Warmluftstrom von ca. 40°C wasserfest.

5. Die Wachsfilme sind mit einem Wasser-Dampf-Gemisch von etwa 90 bis 95°C ohne Zusätze entfernbar. Dies gilt auch für bewitterte Filme – etwa 6 Wochen im Freien – und für künstlich gealterte Filme – 2 Stunden bewässert (Wasserleitung) und 2 Stunden bei 75°C getempert.

6. Nach der restlosen Entfernung der Wachsfilme weisen die Lacke keine Schädigungen, wie z.B. Quellung, Vermattung, Ausblüherscheinungen etc. auf.

Die nachstehenden Beispiele, in denen die angegebenen Mengen stets Gewichtsteile sind, dienen der weiteren Erläuterung der Erfindung.

**Beispiele 1 bis 12**

In einem Rührkessel werden die Wachse bei einer Temperatur von 120°C aufgeschmolzen. Sodann wird das Verseifungsmittel zugesetzt und das Ende des Schäumens abgewartet, welches nach ca. 10 Minuten eintritt. Danach wird der Emulgator zugemischt und der Ansatz unter Rühren in demineralisiertem, siedenden Wasser emulgiert. Die abgekühlte Emulsion wird mit einer Kombinations-Spritzpistole auf Prüfbleche aufgetragen und 6 Stunden bei 70°C in einem Trockenschrank getempert. Die Prüfbleche sind mit Originallacken, wie sie in der Automobilindustrie verwendet werden beschichtet. Die Lackschichten sind nach dem Einbrennen maximal 24 Stunden alt.

Nach Entfernung der Wachsschicht von den Lackoberflächen mittels eines Dampfstrahlgerätes wird der Lack auf Schädigungen (Diffusion und nachfolgendes Ausschwitzen, Anquellung, Ablösung des Lackes bis zur Grundierung) visuell untersucht.

In der folgenden Tabelle sind einige typische Rezepturen erfindungsgemässer Konservierungsmittel zusammengestellt. Die angegebenen Mengen sind Gewichtsteile. Im Falle des Einsatzes wasserhaltiger Rohstoffe (Alkali, Alkansulfonat) sind deren Mengen auf 100%ige Ware umgerechnet. Die Wassermenge beträgt stets «ad 100». Sie ist in der Tabelle mit «ca.» ausgewiesen.

| Bestandteile der Emulsion bz. Prüfung des Films | Beispiel Nr. | | | | | | | | | | | |
|---|---|---|---|---|---|---|---|---|---|---|---|---|
| | 1 | 2 | 3 | 4 | 5 | 6 | 7 | 8 | 9 | 10 | 11 | 12 |
| Säurewachs auf Montanwachsbasis SZ 104; TP 84°C | 4,3 | – | – | – | – | 1,0 | – | – | – | – | – | – |
| Esterwachs auf Montanwachsbasis SZ 30; VZ 128; TP 83°C | – | – | 14,0 | – | 10,0 | 9,0 | 11,0 | 12,7 | 11,0 | – | 6,1 | 6,4 |
| Carnaubawachs | – | – | – | 9,5 | – | – | – | – | – | 10,3 | – | – |
| Polyethylenwachs, oxidiert SZ 21; TP 108°C | – | 10 | – | – | – | – | – | – | – | – | – | |
| Japanwachs | – | – | – | – | – | – | – | – | – | – | 7,2 | – |
| Mikrowachs EP 60–70°C | 10,0 | 16,0 | 14,0 | 14,0 | 10,0 | 10,0 | 3,0 | 16,7 | 15,4 | 19,5 | 16,4 | 13,6 |
| Paraffin EP 50–56°C | – | – | – | – | – | – | 4,6 | – | – | – | – | – |
| Syntheseparaffin EP 102–104°C | – | – | – | – | – | – | 3,4 | – | – | – | – | – |
| Alkali[1] | 0,03 | 0,04 | 0,05 | 0,06 | 0,08 | 0,08 | 0,05 | 0,05 | 0,05 | 0,05 | 0,06 | 0,05 |
| Alkansulfonat[2] | – | – | – | 1,5 | 2,4 | 1,8 | 1,8 | 1,2 | 1,2 | 1,3 | 1,4 | 1,0 |
| Fettaminoxethylat[3] | 0,7 | – | – | – | 0,1 | – | – | – | – | – | – | – |
| Fettalkoholoxethylat[4] | – | 4,8 | 5,1 | – | – | – | – | – | – | – | – | 0,4 |
| entsalztes Wasser ca. | 85 | 69 | 39 | 75 | 77 | 78 | 65 | 69 | 61 | 69 | 69 | 79 |
| Temperaturbeständigkeit | bei –25 bis + 80°C beständig | | | | | | | | | | | |
| Entfernbarkeit | sehr gut mit Wasser-Dampf-Gemisch | | | | | | | | | | | |
| Lackschädigung | nach 6 Stunden bei 70°C keine | | | | | | | | | | | |

[1] Bsp. 2 und 3 KOH, sonst LiOH. Einsatz als 5,6 bzw. 5,3%ige wässrige Lösung
[2] Sulfonat von $C_{13}$–$C_{18}$-n-Paraffinen. Einsatz als 60%ige Lösung in Wasser
[3] $C_{12}$- bis $C_{18}$-Fettamine mit 5–25 Mol E. O.
[4] $C_{16}$- bis $C_{24}$-Fettalkohole mit 5–25 Mol E. O.

Patentansprüche

1. Wasserhaltiges, flüssiges Konservierungsmittel, bestehend aus in Wasser mittels eines Emulgators feinverteilten Wachsen, dadurch gekennzeichnet, dass es aus 0 bis 30 Gew.-% eines Säurewachses auf Basis Montanwachs mit einem Tropfpunkt von 78 bis 100°C und einer Säurezahl von 100 bis 200, oder eines Esterwachses auf Basis Montanwachs mit einem Tropfpunkt von 70 bis 91°C, einer Säurezahl von 1 bis 100 und einer Verseifungszahl von 80 bis 180, oder einer Mischung derartiger Wachse, 0 bis 20 Gew.-% eines Naturwachses, 5 bis 50 Gew.-% eines Kohlenwasserstoffwachses oder eines Oxidates eines derartigen Wachses, oder einer Mischung aus solchen Wachsen, 0,01 bis 3,0 Gew.-% eines basischen Verseifungsmittels, 0,5 bis 8 Gew.-% eines Emulgators und der auf 100 Gew.-% fehlenden Menge Wasser besteht.

2. Wasserhaltiges, flüssiges Konservierungsmittel nach Anspruch 1, dadurch gekennzeichnet, dass das Naturwachs Carnaubawachs, Candelillawachs, Ouricouriwachs oder Japanwachs, das Kohlenwasserstoffwachs ein Tafelparaffin mit einem Erweichungspunkt von 48 bis 62°C, ein Syntheseparaffin mit einem Erweichungspunkt von 98 bis 104°C, ein hochmolekulares 1-Olefin mit einem Erweichungspunkt von 70 bis 75°C, ein mikrokristallines Wachs mit einem Erweichungspunkt von 50 bis 90°C, oder ein Polyolefinwachs mit einem Erweichungspunkt von 100 bis 130°C, und das Kohlenwasserstoffwachsoxidat ein Polyolefinwachsoxidat mit einem Tropfpunkt von 95 bis 130°C und einer Säurezahl von 1 bis 70 ist.

3. Verwendung des Konservierungsmittels gemäss den Ansprüchen 1 und 2 für den temporären Schutz von Metall- und Lackoberflächen.

4. Verfahren zum temporären Schützen von Metall- und Lackoberflächen durch Aufbringen eines wachshaltigen Konservierungsmittels auf dieselben, dadurch gekennzeichnet, dass das Konservierungsmittel eine wässrige Wachsemulsion nach Anspruch 1 ist.

**Revendications**

1. Agent conservateur liquide contenant de l'eau, constitué de cires finement réparties dans de l'eau au moyen d'un émulsionnant, agent caractérisé en ce qu'il est constitué de 0 à 30% en poids d'une cire d'acides à base de cire de Montan ayant un point de goutte de 78 à 100°C et un indice d'acide de 100 à 200, ou d'une cire d'esters à base de cire de Montan ayant un point de goutte de 70 à 91°C, un indice d'acide de 1 à 100 et un indice de saponification de 80 à 180, ou d'un mélange de cires de ce genre, de 0 à 20% en poids d'une cire naturelle, de 5 à 50% en poids d'une cire d'hydrocarbures ou d'un produit d'oxydation d'une cire de ce genre, ou d'un mélange de telles cires, de 0,01 à 3,0% en poids d'un agent de saponification basique, de 0,5 à 8% en poids d'un émulsionnant et de la quantité d'eau requise pour faire 100% en poids.

2. Agent conservateur liquide contenant de l'eau selon la revendication 1, caractérisé en ce que la cire naturelle est la cire de carnauba, la cire de candelilla, la cire d'ouricouri ou la cire du Japon, la cire d'hydrocarbures est une paraffine en plaques ayant un point de ramollissement de 48 à 62°C, une paraffine de synthèse ayant un point de ramollissement de 98 à 104°C, une α-oléfine à haut poids moléculaire ayant un point de ramolissement de 70 à 75°C, une cire microcristalline ayant un point de ramollissement de 50 à 90°C ou une cire de polyoléfines ayant un point de ramollissement de 100 à 130°C, et le produit d'oxydation de cire d'hydrocarbures est un produit d'oxydation de cire de polyoléfines ayant un point de goutte de 95 à 130°C et un indice d'acide de 1 à 70.

3. Application de l'agent conservateur selon l'une des revendications 1 et 2 pour la protection temporaire de surfaces métalliques et de surfaces de peintures.

4. Procédé pour protéger temporairement des surfaces métalliques et des surfaces de peintures par application, sur ces surfaces, d'un agent conservateur contenant une cire, procédé caractérisé en ce que l'agent conservateur est une émulsion aqueuse de cires selon la revendication 1.

**Claims**

1. Aqueous liquid preservative mainly consisting of waxes finely divided in water by means of an emulsifier, which preservative consists essentially of from 0 to 30% by weight of an acid wax based on montan wax with a drop point of 78 to 100°C and an acid number of from 100 to 200, or of an ester wax based on montan wax with a drop point of 70 to 91°C, an acid number of from 1 to 100 and a saponification number of from 80 to 180, or of a mixture of those waxes, of from 0 to 20% by weight of a natural wax, of from 5 to 50% by weight of a hydrocarbon wax or an oxidate of such wax, or of a mixture of those waxes, of from 0.01 to 3.0% by weight of a basic saponifying agent, of from 0.5 to 8% by weight of an emulsifier and the amount of water making up 100% by weight.

2. Aqueous liquid preservative as claimed in claim 1, wherein the natural wax is carnauba wax, candelilla wax, ouricury wax or Japan wax, the hydrocarbon wax is a cake paraffin with a softening point of from 48 to 62°C, a synthetic paraffin with a softening point of from 98 to 104°C, a high-molecular 1-olefin with a softening point of from 70 to 75°C, a microcrystalline wax with a softening point of from 50 to 90°C, or a polyolefin wax with a softening point of from 100 to 130°C, and the hydrocarbon wax oxidate is a polyolefin wax oxidate with a drop point of from 95 to 130°C and an acid number of from 1 to 70.

3. Use of the preservative as claimed in claims 1 and 2 for the temporary protection of metal and lacquered surfaces.

4. Process for temporarily protecting metal and lacquered surfaces by applying a way-containing preservative onto the same, wherein the preservative is an aqueous wax emulsion as claimed in claim 1.